# EUROPEAN PATENT APPLICATION

(11) **EP 1 865 304 A1**
(43) Date of publication of application: **12.12.2007**
(21) Application number: 07109662.2
(22) Date of filing: 05.06.2007
(51) Int. Cl.: G01N 21/03, G01N 21/25

(54) **Microcell and microcell holder**

(30) Priority: 06.06.2006 JP 2006156843
(71) Applicant: JASCO CORPORATION, Hachioji-shi Tokyo 192-8537 (JP)
(72) Inventor: Okubo, Kazuharu, Tokyo 192-8537 (JP); Watanabe, Mitsuo, Tokyo 192-8537 (JP); Fuchigami, Ikuo, Tokyo 192-8537 (JP); Wada, Akio, Tokyo 192-8537 (JP); Masago, Hisashi, Tokyo 192-8537 (JP)
(74) Representative: Henkel, Feiler & Hänzel

(57) **Abstract**

A microcell (10) for use in analysis of very small amounts of liquid samples, the microcell comprising: a plate spacer (12) having a plurality of small holes (24) with notches (22) widening toward sample injection openings (20) in a side wall; and window plates (14) made of a material passing measuring light, disposed to face each other on either side of the spacer to cover the plurality of small holes from the front and the back; wherein spaces formed by the plurality of small holes of the spacer and the window plates serve as a plurality of cell chambers (30) for containing the liquid samples; and a dimension of the plurality of small holes and the thickness of the spacer are determined in accordance with the amounts of the liquid samples, and a dimension of parts joining the notches and the plurality of small holes is smaller than the dimension of the plurality of small holes.

## Description

### BACKGROUND OF THE INVENTION

### FIELD OF THE INVENTION

The present invention relates to microcells and microcell holders, and more specifically, to the reduction of the amount of a sample required to make an appropriate analysis and to the arrangement of multiple cells.

### PRIOR ART

Analysis apparatuses have been conventionally used to conduct qualitative analysis or quantitative analysis of the components in a liquid sample.

A V-shaped microcell (refer to Japanese Unexamined Patent Application Publication No. 2002-228580 (Fig. 6(b)), for instance) or an optical fiber can be used conventionally in analysis of a small amount of a liquid sample on the order of 5 microliters by means of an analysis apparatus.

In the analysis using the V-shaped microcell, the cell interior, which is shaped like a V-shaped groove, and the small sample capacity make it possible to analyze a very small amount of the liquid sample. Measuring light coming from the analysis apparatus is directed through the very small amount of the liquid sample held in the bottom of the groove and is guided to a sensor, where the intensity is measured.

In the analysis using the optical fiber, the liquid sample is placed on a mirror plane, and a first end of the optical fiber is brought into contact with the liquid sample, keeping an appropriate distance from the mirror plane. Measuring light guided into the other end of the optical fiber comes out of the first end of the optical fiber in contact with the liquid sample and passes through the liquid sample. The measuring light is then reflected by the mirror plane and re-enters the optical fiber from the first end. This light then exits and is guided to a sensor, where the intensity is measured.

In this field, the capability of analyzing a further smaller amount of a liquid sample appropriately is required, and the arrangement of multiple cells for conducting an efficient analysis is also required. The conventional systems described above, however, have room for improvement in terms of handling a further smaller amount of the sample and multiple cells.

The V-shaped microcell has a small cell width of about 1 mm and a distance of 10 mm or greater between the top edge of the cell and the inner chamber of the cell, and it is thus difficult to put a very small amount of the sample into the cell properly. This becomes a serious problem especially when a plurality of V-shaped microcells is used.

A plurality of V-shaped microcells may be arranged on a microcell holder for successive measurement, but poor positioning repeatability of the V-shaped microcells in the microcell holder would result in insufficient measurement repeatability.

It has been almost impossible to use multiple optical fibers in the conventional system.

The use of an optical fiber allows the amount of the sample to be reduced, but about 90% of the light is usually lost when it enters the optical fiber. Since this inefficient step is repeated twice in the analysis using the optical fiber, as described above, the usage rate of light is only about 1%. This problem becomes serious in analysis using the microcell because only a small amount of light information is obtained from the small amount of the sample.

### SUMMARY OF THE INVENTION

Considering the problems described above, it is an object of the present invention to provide a microcell and a microcell holder that allow a very small amount of a sample to be analyzed efficiently.

### <Microcell>

A microcell provided to achieve the foregoing object according to the present invention is used to analyze a very small amount of a liquid sample, and it is preferable that the microcell include a plate spacer and window plates.

The spacer is a plate provided with a plurality of small holes having notches toward sample injection openings in its side wall.

The window plates are disposed to cover the front and back of the small holes, facing each other on either side of the spacer, and are made of a material that passes the measuring light.

It is preferred that the microcell according to the present invention use spaces formed by the plurality of small holes in the spacer and the window plates as a plurality of cell chambers for containing the liquid samples, and a dimension of the plurality of small holes and the thickness of the spacer be determined in accordance with the amounts of the liquid samples and a dimension of parts joining the notches and the plurality of small holes be smaller than the dimension of the plurality of small holes.

The microcell according to the present invention is further preferred to include window retainers. The window retainers are disposed to face each other on either side of the window plates and bring the spacer and the window plates into close mechanical contact with each other.

In the microcell according to the present invention, it is strongly preferable that the plate spacer and the window plates be bonded (welded) to each other.

### <Microcell holder>

A microcell holder provided to achieve the foregoing object according to the present invention holds a microcell according to the present invention on an optical path in an analysis apparatus, and the microcell holder includes a cell switcher.

The cell switcher holds the microcell in such a movable manner that a desired one of the plurality of cell chambers is placed on the optical path in the analysis apparatus.

According to the present invention, it is preferred that the cell switcher hold the microcell, which is substantially circular, and include holder and rotator.

The holder holds the microcell in such a rotatable manner that the microcell is rotated to place the desired one of the plurality of cell chambers on the optical path in the analysis apparatus.

The rotator rotates the holder for holding the microcell to place the desired one of the plurality of cell chambers on the optical path in the analysis apparatus.

According to the present invention, it is also preferable that a mask be further provided.

The mask is disposed just in front of the microcell and narrows the measuring light coming from a previous stage and directs the light into a liquid sample contained in the desired one of the plurality of cell chambers.

According to the present invention, it is preferable that the microcell be detachable from the side opposite to the mask.

Moreover, the microcell holder according to the present invention is preferred to have mask position adjuster.

The mask position adjuster adjusts the position of the optical axis of an aperture of the mask in a desired manner in a plane orthogonal to the optical path in the analysis apparatus. Advantageous effect of the invention

### <Microcell>

A microcell according to the present invention, including the means as described above, allows a very small amount of a sample to be analyzed efficiently.

In the microcell according to the present invention, when the plate spacer and the window plates are bonded (welded) to fasten the plate spacer and the window plates securely, the very small amount of the sample can be analyzed efficiently with higher reliability.

### <Microcell holder>

A microcell holder according to the present invention, including the means as described above, allows a very small amount of a sample to be analyzed efficiently.

In the microcell holder according to the present invention, the cell switcher holds the microcell, which is circular, rotatably and places desired cell chambers successively on the optical path, so that efficient analysis of the very small amount of the sample can be conducted with higher reliability.

In the microcell holder according to the present invention, when a mask is provided just in front of the microcell, efficient analysis of the very small amount of the sample can be conducted with higher reliability.

According to the present invention, when the microcell is detachable from the side opposite to the mask, efficient analysis of the very small amount of the sample can be conducted with greater ease.

In the microcell holder according to the present invention, when mask position adjuster for adjusting the position of the optical axis of the mask is provided, the measuring light coming from the previous stage is directed exactly through the liquid sample contained in a desired cell chamber, so that efficient analysis of the very small amount of the sample can be conducted with higher reliability.

### BRIEF DESCRIPTION OF THE DRAWINGS

Figs. 1A to 1E are views showing an outline structure of a microcell according to an embodiment of the present invention.

Fig. 2 is a view showing an outline structure of a microcell holder holding the microcell of the embodiment of the present invention.

Fig. 3A shows the microcell holder holding the microcell of the embodiment of the present invention, viewed from a direction orthogonal to an optical axis.

Fig. 3B is an enlarged view of a cell switching knob of the microcell holder shown in Fig. 3A.

Fig. 3C shows the microcell holder shown in Fig. 3A, viewed from the direction of the optical axis.

Figs. 4A to 4C are views showing a cell attaching-and-detaching mechanism suitable for the microcell holder of the embodiment of the present invention.

Figs. 5A and 5B are views showing a cell positioner suitable for the microcell holder of the embodiment of the present invention.

Figs. 6A and 6B show a modified example of the cell positioner shown in Fig. 5.

Fig. 7 is a view showing a mask position adjuster suitable for the microcell holder of the embodiment of the present invention.

Figs. 8A to 8D are views showing a microcell using mechanical contact according to another embodiment of the present invention.

Fig. 9 is a view showing an outline structure of a translation microcell according to another embodiment of the present invention.

### DESCRIPTION OF THE PREFERRED EMBODIMENTS

Preferred embodiments of the present invention will be described below with reference to the drawings.

### <Microcell>

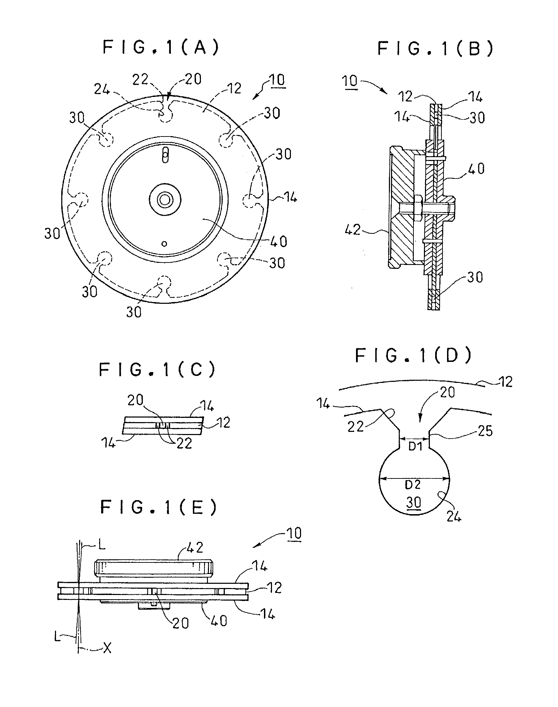

Figs. 1A to 1E show an outline structure of a microcell according to an embodiment of the present invention. Fig. 1 A shows the microcell viewed from a light entry side; Fig. 1 B shows a vertical cross-sectional view of the microcell; Fig. 1C shows an enlarged view of a main part of the microcell; Fig. 1D shows an enlarged view of a main part of a cell chamber; and Fig. 1 E shows the microcell viewed from above.

The present invention is characterized by the configuration of multiple cells and by reduction in the amount of the liquid sample required to conduct appropriate analysis, so that a very small amount of the liquid sample can be efficiently analyzed. The microcell according to the present invention is structured as described below.

A microcell 10 shown in Figs. 1 A to 1 E is circular and includes a circular plate (plate spacer) 12 and window plates 14.

The circular plate 12 is made of a solvent-resistant material (such as a resin). The circular plate 12 has a plurality of small circular holes (small holes) 24 each having notches 22 whose width increases toward a sample injection opening 20 in an outer wall. The small circular holes 24 are disposed in such a manner that the centers of the small circular holes 24 are positioned on a circumference near the rim of the circular plate 12 at regular intervals.

The window plates 14 are doughnut-shaped plates made of a material that passes measuring light L (such as a fused silica plate). The window plates 14 are disposed to block or cover the small circular holes 24 of the circular plate 12 from both the light entry side and the light exit side, facing each other on either side of the circular plate 12.

In this embodiment, the circular plate 12 and the window plates 14 are bonded (welded) to each other so that the liquid sample does not leak out. The spaces enclosed by the small circular holes 24 of the circular plate 12 and the window plates 14 are cell chambers 30 for containing the liquid sample.

In this embodiment, the microcell 10 has eight small circular holes 24 in the circular plate 12, and the small circular holes 24 covered with the window plates 14 form eight cell chambers 30.

The diameter of the small circular holes 24 and the thickness of the circular plate 12 of the microcell 10 are determined by the amount of the liquid sample. The internal dimension D₁ of a joining part 25 between the notches 22 and the small circular hole 24 of the microcell 10 is smaller than the internal diameter D₂ of the small circular hole 24.

The microcell 10 of this embodiment further includes an entry-side outer frame 40 and an exit-side outer frame 42. The entry-side outer frame 40 and the exit-side outer frame 42 are disposed to face each other on either side of the circular plate 12.

The microcell 10 of this embodiment is roughly structured as described above, and its advantages will be described next. The microcell 10 of the embodiment can provide a cell chamber 30 having such a capacity that a liquid sample available even in a very small amount can be appropriately analyzed, by adjusting the thickness of the circular plate 12 or the diameter D₂ of the small circular hole 24 in accordance with the amount of the liquid sample. For instance, when the circular plate 12 has a thickness of 1 mm and the small circular hole 24 has a diameter D₂ of 2 mm, the cell chamber 30 has a capacity of 3 microliters.

A plurality of cell chambers 30 can be provided easily and reliably in this embodiment, so that multiple microcells 10 can be configured easily and reliably. In the embodiment, since the liquid sample is held in each cell chamber 30 by surface tension, the multiple microcells 10 can be provided with great ease and reliability.

The circular plate 12 and the window plates 14 bonded (welded) to each other in this embodiment are very effective in preventing liquid leakage, in comparison with mechanical close contact made by a window retainer, a screw, or the like. The cell chambers can thus hold the liquid sample reliably.

The advantages will be described in detail. The liquid sample to be analyzed is put into the microcell 10 through the sample injection opening 20 by means of a microsyringe or the like.

The microcell 10 has the small circular holes 24 near the rim of the circular plate 12, and the small circular holes 24 each have the notches 22 whose width increases toward the sample injection opening 20 from the small circular hole 24.

Because the width or the internal dimension of the notches 22 is maximum at the sample injection opening 20, a tip of a micropipette or the like can be easily put into or taken out of the sample injection opening 20, and the liquid sample can be put into the cell chamber 30 efficiently.

Because the small circular holes 24 and the notches 22 are disposed on the circumference near the rim of the circular plate 12, the distance between the outer wall of the cell and the cell chamber is shorter than that in general V-shaped microcells. Accordingly, the liquid sample can be put into the cell chambers 30 more accurately with ease, providing more efficient liquid-sample injection.

With the width or internal diameter D₁ of the notches 22 minimized in the joining part 25 or the boundary of the small circular hole 24, the cell is designed to securely hold the liquid sample put into the cell chamber 30 by surface tension, without a lid.

In the microcell 10, the internal diameter D₁ of the joining part 25 between the notches 22 and the small circular hole 24 is smaller than the internal diameter D₂ of the small circular hole 24, so that the liquid sample is held in the cell chamber 30 by surface tension.

Accordingly, in comparison with general cells requiring a lid, this embodiment allows the liquid sample to be put into the cell chambers 30 more efficiently and allows multiple microcells to be configured with ease.

The microcell 10 of the embodiment, configured as described above, allows samples available even in a very small amount to be measured successively with reliability, which will result in a leap in analysis efficiency.

After the liquid sample is prepared, the microcell 10 is mounted in an analysis apparatus, where the liquid sample in each cell chamber is analyzed. In this embodiment, it is preferable that a microcell holder, which will be described below, be used to conduct successive measurement with the microcell 10 appropriately and efficiently.

### <Microcell holder>

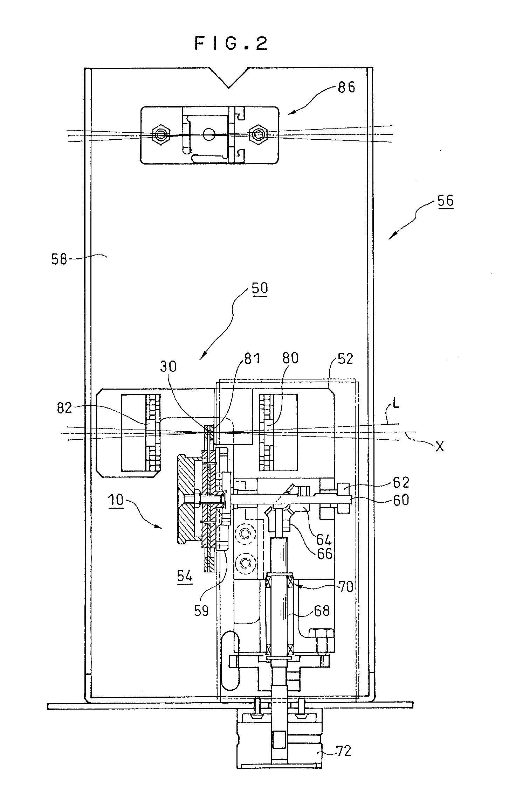

Fig. 2 shows a microcell holder 50 holding the microcell 10 of the embodiment. The figure shows the microcell holder viewed from above.

The microcell holder 50 shown in the figure includes a cell table 52 and a cell switcher 54.

The cell table 52 is provided on a base 58 of a sample chamber 56 in the main body of an ultraviolet-visible spectrophotometer, or an analysis apparatus.

The cell switcher 54 is provided on the cell table 52 and holds the microcell 10 in such a manner that it can be rotated to place a desired cell chamber 30 on an optical path X in the sample chamber 56.

The cell switcher 54 includes a cell support 59, an output-side cell switching shaft 60, an output-side cell switching shaft bearing 62, an output-side bevel gear 64, an input-side bevel gear 66, an input-side cell switching shaft 68, an input-side cell switching shaft bearing 70, and a cell switching knob 72, as holder and rotator of the present invention.

The cell support 59 supports the microcell 10 rotatably in such a manner that the optical axis X is orthogonal to the window plate 14.

The output-side cell switching shaft 60 rotates the cell support 59 about a line parallel to the optical axis X. The output-side cell switching shaft bearing 62 supports the output-side cell switching shaft 60 rotatably.

The input-side cell switching shaft 68 rotates about a line orthogonal to the optical axis X.

The input-side cell switching shaft bearing 70 supports the input-side cell switching shaft 68 rotatably.

The cell switching knob 72 rotates the input-side cell switching shaft 68.

The microcell holder 50 of the embodiment includes a lens 80 for focusing the measuring light L coming from a previous stage onto the liquid sample in the cell chamber 30, a mask 81 for narrowing the measuring light L, and a lens 82 for collimating the measuring light L passing through the liquid sample in the cell chamber 30.

In this embodiment, a reference microcell holder 86 is provided to hold a reference microcell to be compared with the microcell 10.

The microcell holder 50 of the embodiment is configured roughly as described above, and its advantages will be described next. When successive measurement is conducted with the microcell 10, the microcell 10 is mounted in the microcell holder 50; the measuring light L is applied to the liquid sample in a desired cell chamber 30 in the ultraviolet-visible spectrophotometer; and the light passing through the sample is measured.

In this embodiment, the cell switcher 54 allows desired cell chambers 30 to be placed successively on the optical path X with ease and reliability, so that successive measurement of the liquid samples in the cell chambers 30 of the microcell 10 can be conducted efficiently and reliably.

The advantages will be described in detail. In the present embodiment, the microcell 10 containing the liquid sample is placed in the microcell holder 50 in the sample chamber 56 in such a manner that the measuring light L passes through a desired cell window, or an area of the window plates 14 corresponding to a desired cell chamber 30, at a right angle.

After the microcell is placed in the microcell holder 50, the measuring light L is focused by the lens 80, narrowed by the mask 81, and incident on the liquid sample in the desired cell chamber 30. The light passing through the liquid sample in the cell chamber 30 is substantially collimated to parallel rays L by the lens 82, guided into a subsequent stage, and used for analysis.

In this embodiment, since the measuring light L is incident on the liquid sample through the window plate 14, and the transmitted light L is obtained, the usage rate of the measuring light is higher in comparison with measurement using an optical fiber. Accordingly, even a small amount of a liquid sample can be appropriately analyzed.

In the present embodiment, the mask 81 is disposed just in front of the microcell 10. The mask 81 narrows the measuring light L coming from the previous stage and directs the light into a desired cell chamber 30 of the microcell 10. Accordingly, this embodiment allows the measuring light L to be reliably directed into the desired cell chamber 30 of the microcell 10.

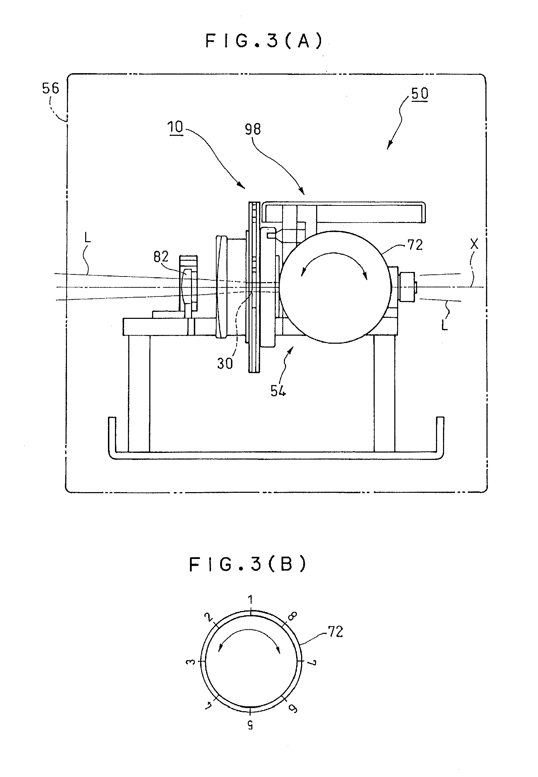

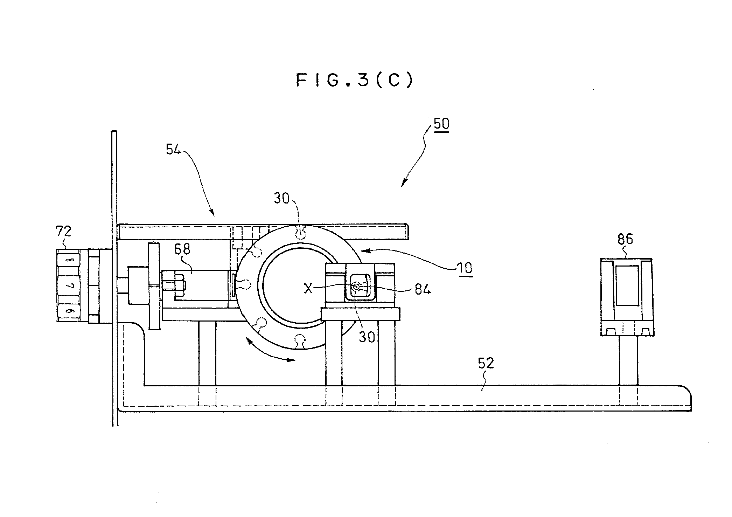

In the present embodiment, the cell switcher 54 makes it possible to measure the liquid samples in the cell chambers 30 successively by rotating the microcell 10. With the microcell 10 placed in the microcell holder 50 in such a manner that the measuring light L passes through the cell chamber 30 at a right angle, as shown in Fig. 3A, the operator turns the cell switching knob 72, shown in Fig. 3B, to rotate the microcell 10, as shown in Fig. 3C. This simple operation reliably and easily places the desired cell chambers 30 successively on the optical path X in the sample chamber.

In this embodiment, the cell switcher 54 allows the desired cell chambers 30 of the microcell 10 to be placed successively on the optical path X with ease and reliability, so that successive measurement of the liquid samples in the cell chambers 30 of the microcell 10 can be conducted appropriately and efficiently.

As shown in Fig. 3B, numbers are marked on the cell switching knob 72, so that the cell chamber 30 placed on the optical path X can be identified. The operator can correctly identify the cell chamber 30 currently placed on the optical path X by this number. Therefore, the desired cell chamber 30 can be placed on the optical path and measured with ease and reliability.

After the measurement, the liquid samples in the cell chambers 30 can be easily collected by a microsyringe or the like. Then, the cell chambers 30 can be cleaned by water or the like.

As described above, the microcell holder 50 of the present embodiment includes the cell switcher 54. Accordingly, multiple cell chambers 30 of the microcell 10 can be successively placed on the optical path X easily and appropriately in this embodiment. With the microcell 10, even a very small amount of a sample can be analyzed appropriately and efficiently. Moreover, successive measurement can be conducted appropriately and efficiently with the cell chambers 30 of the microcell 10. Therefore, this embodiment results in a leap in analysis efficiency of a small amount of a sample of about a few microliters, which was previously very difficult.

In this embodiment, it is also very important for reliable and efficient analysis that the microcell be capable of being placed in the microcell holder easily and reliably.

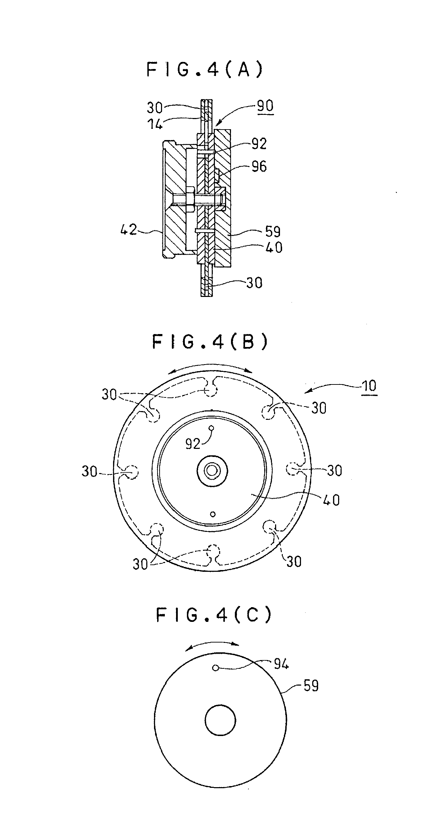

Accordingly, it is very preferable that a cell attaching-and-detaching mechanism, shown in Fig. 4, be further provided in this embodiment. Fig. 4A shows a vertical cross-sectional view of the microcell and a part of the microcell holder; Fig. 4B shows the cell attaching-and-detaching mechanism (on the microcell side) viewed from the entry side; and Fig. 4C shows the cell attaching-and-detaching mechanism (on the microcell-holder side) viewed from the exit side.

A cell attaching-and-detaching mechanism 90 shown in the figure includes a cell support 59, a positioning pin 92, and an indentation 94.

The cell support 59 is disposed on the side of the microcell holder and rotates with the output-side cell switching shaft 60 to support the microcell 10.

The positioning pin 92 is disposed on the entry-side outer frame 40 of the microcell 10, and the indentation 94 is provided in the cell support 59.

The positioning pin 92 and the indentation 94 are used to position the microcell 10 and the microcell holder 50.

The microcell 10 and the microcell holder 50 of the present embodiment has the positioning pin 92 and the indentation 94. When spectral analysis is conducted, this embodiment allows the microcell 10 to be placed in a predetermined position of the microcell holder 50 easily and accurately just by placing the microcell 10 on the cell support 59 of the microcell holder 50 in such a manner that the positioning pin 92 fits in the indentation 94. The present embodiment improves the positioning repeatability of the microcell 10 on the microcell holder 50, so that successive measurements with multiple cell chambers 30 of the microcell 10 can be conducted with great ease and reliability.

In the embodiment, it is also preferable for efficient analysis that the entry-side outer frame 40 of the microcell 10 and the cell support 59 of the microcell holder 50 (holder and rotator) contain a magnet 96 in their mounting parts so as to easily and detachably mount the microcell 10 on the cell support 59 of the microcell holder 50 by a magnetic force of the magnet 96.

### <Detachable microcell>

It is strongly preferable in this embodiment that the microcell 10 be detachable from the side opposite to the mask 81. If the microcell 10 were detachable from the mask side, the mask 81 just in front of the microcell 10 would obstruct the attaching and detaching of the microcell 10.

If the mask 81 is disposed so as to keep a certain distance from the microcell 10, so that the microcell 10 can be easily attached or detached, the effect of the mask 81 of the present invention, namely, the effect of narrowing the measuring light L coming from the previous stage and directing the light into a desired cell chamber 30 accurately, might not be sufficiently provided.

### <Cell positioner>

In addition, it is very important in this embodiment that a cell positioner for rotating the microcell 10 to place a desired cell chamber 30 accurately on the optical path X be provided to conduct the analysis more accurately and efficiently.

According to the present invention, it is preferable that the cell positioner be provided for the microcell 10 or a portion where the microcell 10 is integrated. A strongly preferable position on the microcell 10 or on the portion where the microcells 10 is integrated is on the circular face of the microcell 10 or on the circumferential wall (side wall) of the microcell 10.

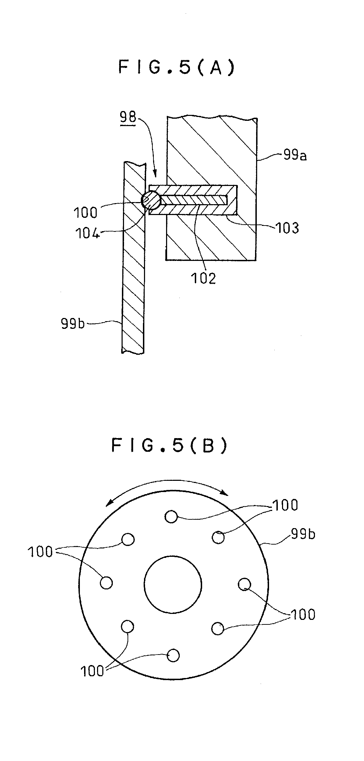

Figs. 5A and 5B show an outline structure of the cell positioner. Fig. 5A shows a vertical cross-sectional view of an area in the vicinity of the cell positioner viewed from a side; Fig. 5B shows the microcell side of the cell positioner viewed from the previous stage.

A cell positioner 98 shown in Fig. 5A includes a fixed member 99a, a movable member 99b, indentations 100, a spring 102, a screw 103, and a ball 104.

The fixed member 99a is secured to the microcell holder 50 and faces the circular face of the microcell 10 or the movable member 99b.

The movable member 99b is provided on the circular face of the microcell 10 and rotates with respect to the fixed member 99a. The movable member 99b has as many indentations 100 as the cell chambers 30 of the microcell 10. In this embodiment, eight indentations 100 are provided on the circular face of the movable member 99b at regular intervals.

The ball 104 fits in the indentation 100 and is held by the screw 103 provided on the fixed member 99a, and is pressed toward the indentation 100 by the spring 102.

When the operator rotates the cell switching knob 72, the movable member 99b provided on the microcell 10 rotates with respect to the fixed member 99a of the cell positioner 98. Each time it rotates by a prescribed angle, that is, each time a cell chamber 30 is placed on the optical path, the ball 104 engages with the indentation 100. When this engagement occurs, the operator can judge that the cell chamber 30 is accurately placed on the optical path.

The embodiment makes it easy and reliable to successively position a plurality of cell chambers 30 accurately on the optical path. Because the positioning repeatability of the cell chambers 30 increases, successive measurements with multiple cell chambers 30 of the microcell 10 can be conducted easily and appropriately.

In this embodiment, the positioner 98 is preferably provided for the microcell 10 or a portion where the microcell 10 is integrated, that is, the movable member 99b. This can more reliably avoid the effect of a positioning error because of a movement error of a transfer shaft or the like, in comparison with a case where the positioner 98 is disposed separately from the microcell 10. Accordingly the cell chambers 30 can be positioned with higher reliability.

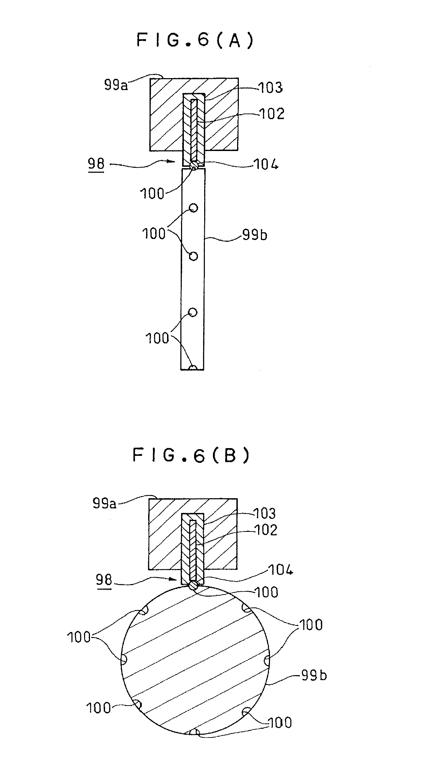

Figs. 6A and 6B show a modified example of the cell positioner shown in Fig. 5. Fig. 6A shows the positioner viewed from a side; and Fig. 6B shows a vertical cross-sectional view of the positioner viewed from the side of the circular face.

A cell positioner 98 shown in Fig. 6A is disposed to face the side wall of the microcell 10.

A fixed member 99a secured to the microcell holder 50 is disposed to face an upper part of the side wall of the microcell 10.

Indentations 100 are provided in the circumferential wall (side wall) of a movable member 99b at regular intervals.

The cell positioner 98 structured as shown in Fig. 6A has the same advantages as the cell positioner 98 shown in Fig. 5A.

### <Mask position adjuster>

In addition, it is very important in this embodiment that the position of the mask 81 disposed just in front of the microcell 10 be adjusted to direct the measuring light into a desired cell chamber 30 of the microcell 10 with higher reliability.

For example, the internal diameter of the cell chamber 30 is as very small as, for example, about 1.6 mm, and the diameter of an aperture 81a of the mask 81 is also as very small as about 1.0 mm. Accordingly, it is preferable that mask position adjuster 108 be provided to adjust the position of the optical axis of the mask 81.

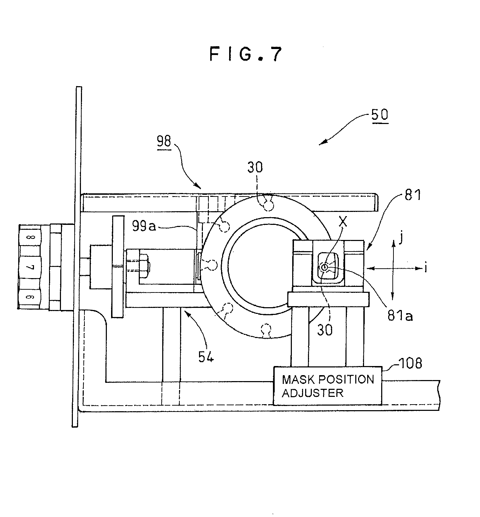

As shown in Fig. 7, the mask position adjuster 108 can move the position of the optical axis of the mask 81, or the position of the aperture 81a in a desired manner in a plane orthogonal to the optical path X in the ultraviolet-visible spectrophotometer, in horizontal directions (indicated by arrows "i" in the figure) and vertical directions (indicated by arrows "j" in the figure) in this embodiment.

The position of the optical axis of the mask 81 can be adjusted with the mask position adjuster 108 described above, so that the measuring light L can be directed into the very small cell chamber 30 of the microcell 10 with higher reliability.

The microcell 10 having eight cell chambers 30 has been described above, but the present invention can be applied to any other number of cell chambers.

In the configuration described above, the cell chamber 30 to be placed on the optical path X is switched by the cell switching knob 72, which is manually rotated by the operator from the outside of the sample chamber 56. The cell chamber 30 can also be switched automatically. For example, a driving force may be transferred from a motor to the input-side cell switching shaft 68 to rotate the input-side cell switching shaft 68 by computer control, so that the cell chamber 30 placed on the optical path X is switched automatically.

In the configuration described above, it is strongly preferred that the plate spacer and the window plates be bonded to each other. The cell formed by bonding the plate spacer and the window plates to each other is much more effective in preventing liquid leakage than that formed by mechanical close contact using a window retainer, a screw, or the like. The cell chamber can hold the liquid sample reliably.

However, the circular plate (plate spacer) 12 and the window plates 14 of the microcell 10 may also be brought into close contact with each other by a mechanical method using a window retainer, a screw, or the like.

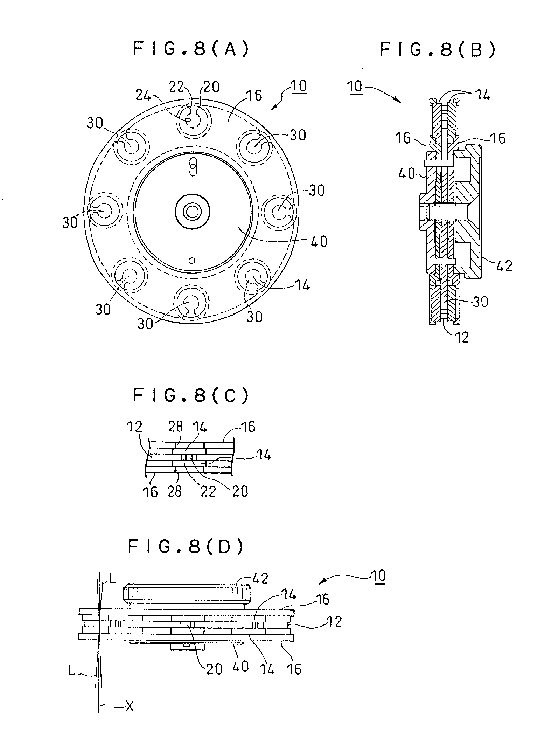

Figs. 8A to 8D show a modified example of the microcell of the embodiment. Fig. 8A shows the microcell viewed from the light entry side; Fig. 8B shows a vertical cross-sectional view of the microcell; Fig. 8C shows an enlarged view of a main part of the microcell; and Fig. 8D shows the microcell viewed from above.

Although doughnut-shaped window plates are used as the window plates 14 in the configuration described above, a plurality of pairs of circular window plates 14 are used in Figs. 8A to 8D. These pairs of circular window plates 14 are disposed at corresponding cell chambers 30.

The microcell 10 shown in Figs. 8A to 8D includes window retainers 16. The window retainers 16 are made of a plate of rigid metal or the like. The window retainers 16 are disposed to face each other on either side of the window plates 14 in such a manner that the window plates 14 are tightened toward the circular plate 12 with a screw or the like. The circular plate 12 and the window plates 14 are brought into close contact with each other, so that the liquid sample will not leak. The window retainers 16 have light-passing holes 28 for passing the measuring light 26 through the window plates 14.

In the embodiment, small circular holes 24 closed off by the window plates 14 form eight cell chambers 30.

In the embodiment, an entry-side outer frame 40 and an exit-side outer frame 42 are disposed to face each other on either side of the window retainers 16.

### <Translatory cell>

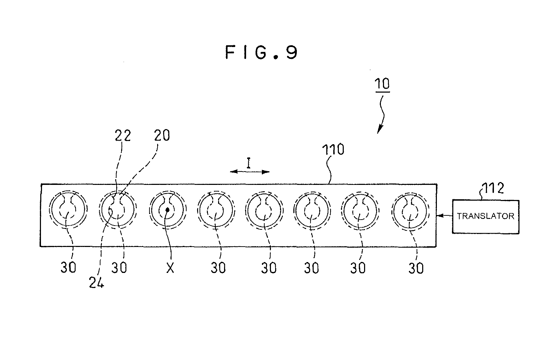

It is strongly preferable that the microcell 10 have a plurality of cell chambers 30 disposed on a circumference of the circular plate 12 at regular intervals, as described above. It is also preferable that a plurality of cell chambers 30 be disposed in a line in the longitudinal direction on a long plate (plate spacer) 110 as shown in Fig. 9.

In this case, it is preferred that a microcell holder use, instead of the rotator, a translator 112 for moving a microcell 10 linearly in a direction (indicated by arrows "I" in the figure) orthogonal to the optical axis, as a cell switcher for switching the cell chamber 30 placed on the optical path X.

Although the microcell having the window plates and the spacer bonded (welded) to each other is strongly preferred, as described above, a cell can also be configured with window plates and a spacer brought into close contact with each other by a cell retainer. A liquid sample is reliably held in a cell chamber 30 by surface tension without a lid, as in the microcell having the window plates and the spacer bonded (welded) to each other, so that multiple cells can be easily configured.

## Claims

1. A microcell used in analysis of very small amounts of liquid samples, the microcell comprising:
a plate spacer having a plurality of small holes with notches widening toward sample injection openings in a side wall; and
window plates made of a material passing measuring light, disposed to face each other on either side of the spacer to cover the plurality of small holes from the front and the back;
wherein spaces formed by the plurality of small holes of the spacer and the window plates serve as a plurality of cell chambers for containing the liquid samples; and
a dimension of the plurality of small holes and the thickness of the spacer are determined in accordance with the amounts of the liquid samples, and a dimension of parts joining the notches and the plurality of small holes is smaller than the dimension of the plurality of small holes.

2. A microcell according to Claim 1, further comprising window retainers disposed on either side of the window plates for bringing the spacer and the window plates into close mechanical contact with each other.

3. A microcell according to Claim 1, wherein the plate spacer and the window plates are welded to each other.

4. A microcell holder for holding a microcell according to one of Claims 1 to 3 on an optical path in an analysis apparatus, the microcell holder comprising:
a cell switcher for holding the microcell in such a movable manner that a desired one of the plurality of cell chambers is placed on the optical path in the analysis apparatus.

5. A microcell holder according to Claim 4,
wherein the cell switcher holds the microcell, which is substantially circular; and
the cell switcher comprises:
holder for holding the microcell in such a rotatable manner that the microcell is rotated to place the desired one of the plurality of cell chambers on the optical path in the analysis apparatus; and
rotator for rotating the holder for holding the microcell to place the desired one of the plurality of cell chambers on the optical path in the analysis apparatus.

6. A microcell holder according to Claim 4 or 5, further comprising a mask disposed just in front of the microcell, for narrowing measuring light coming from a previous stage and directing the light into a liquid sample contained in the desired one of the plurality of cell chambers.

7. A microcell holder according to Claim 6, wherein the microcell is detachable from the side opposite to the mask.

8. A microcell holder according to Claim 6 or 7, further comprising mask position adjuster for adjusting, in a desired manner, the position of the optical axis of the mask with respect to the optical path in the analysis apparatus in a plane orthogonal to the optical path.
